Europäisches Patentamt

European Patent Office

Office européen des brevets

(11) Publication number : **0 465 136 A2**

# EUROPEAN PATENT APPLICATION

(21) Application number : **91305842.6**

(51) Int. Cl.⁵ : **G02B 26/10**

(22) Date of filing : **27.06.91**

(30) Priority : **27.06.90 US 544773**

(43) Date of publication of application :
**08.01.92 Bulletin 92/02**

(84) Designated Contracting States :
**DE FR GB**

(71) Applicant : **XEROX CORPORATION**
**Xerox Square - 020**
**Rochester New York 14644 (US)**

(72) Inventor : **Maeda, Patrick Y.**
**900 Camino Real**
**No 102, Redondo Beach, California 90277 (US)**

(74) Representative : **Goode, Ian Roy et al**
**Rank Xerox Patent Department Albion House,**
**55 New Oxford Street**
**London WC1A 1BS (GB)**

(54) **Optical scanning apparatus having submicron wobble correction.**

(57)   A rotating polygon (14) mirror optical scanning system which corrects for wobble has an axially adjustable cross-scan cylindrical lens (20) in the pre-polygon mirror optical section (12) and an axially adjustable cross-scan cylindrical lens (30) between a two element f-theta lens (24) and a wobble correction cylindrical mirror (32) in the post-polygon mirror optical section (16). The axially adjustable lens (30) in the post-polygon optics serves to flatten the cross-scan field curvature and reposition the cross-scan field focus allowing for looser fabrication tolerances for the optical scanning system. The axially adjustable lens (20) in the pre-polygon optics serves to position the cross-scan beam waist in the scan line (34).

EP 0 465 136 A2

**FIG. 1**

The present invention relates to a rotating polygon mirror optical scanning apparatus, and more particularly, to a scanning apparatus which in corrects for wobble of the rotating polygon mirror.

Many conventional raster optical scanners utilize a multi-faceted rotating polygon mirror as the scanning element. A collimated beam of light, as, for example, from a laser used with a collimator, strikes the facets of the rotating polygon which causes the reflected light to revolve about an axis near the center of rotation of the rotating polygon and scan a straight line. This reflected light can be utilized to scan a document at the input of an imaging system or can be used to impinge upon a photographic film or a photosensitive medium, such as a xerographic drum in the output of the imaging system.

Wobble is defined as an error in the optical scanning system caused by the rotating facet not being exactly parallel to the vertical axis. The beam reflected from the facet is thereby angled up or down a small amount resulting in scan line displacement errors in the cross-scan direction.

Angular wobble errors can be caused by several factors. The motor driving the rotating polygon mirror can vibrate during operation. The motor shaft can deviate from its rotational axis. The facets of the polygon mirror can be irregular surfaces which do not lie parallel to each other.

Extreme precision in the manufacture of the motor, motor shaft and polygon mirror can reduce wobble but not eliminate it. Such precision also increases the steps of production and makes mass production of the scanning system virtually impractical and commercially prohibitive in cost.

The motor/polygon mirror assemblies (MPA's) used in the optical scanning systems are either air-bearing or ball-bearing. Air-bearing MPA's are expensive but capable of running at 15, 000 to 40, 000 rpm. They typically exhibit 15 to 30 arc second peak to peak angular wobble errors. Ball-bearing MPA's are three to five times less expensive than air-bearing MPA's but only capable of running at 5,000 to 15,000 rpm. They usually exhibit peak to peak angular wobble errors of 1 to 2 arc minutes. The angular deviation of the beam after it is deflected off the facet is twice the angular wobble error of the MPA since the polygon mirror facet is a reflective element.

Many systems have been disclosed in the art to overcome various optical distortions such as wobble caused by rotating polygon mirror optical scanners. Typically, the systems will involve an intricate series of anamorphic lenses or non-cylindrical and non-spherical lenses such as toroidal-shaped ones or mirrors to reflect the beam off the facet several times or even deviation feedback by optical sensors to provide electronic synchronization of the beam. Also proposed has been a series of f-theta lenses which can be adjusted relative to each other based on complex formulae to correct for wobble and other optical distortions.

A problem with the prior art systems to correct wobble is that some of the lens elements used to produce the beam are very expensive. Another factor in the high cost of correcting wobble is the high fabrication and assembly tolerances required for the optical scanning system to work efficiently and properly.

It is an object of this invention to provide a simple and inexpensive means to correct for wobble in an optical scanning system.

In accordance with the present invention, there is provided an optical scanning apparatus for correcting wobble comprising:

a rotating polygon mirror with a plurality of facets,

a collimated laser beam directed onto one of said facets through a pre-polygon mirror optical section characterised by,

a post-polygon mirror optical section which focuses the beam reflected off said one of said facets to a scan line, said post-polygon mirror optical section comprising a f-theta lens system, a cylindrical lens and a wobble correction mirror, said cylindrical lens being adjustable along the axis of said one of said facets and said wobble correction mirror to flatten the cross-scan field curvature of said beam and reposition the cross-scan field focus of said beam at said scan line.

The optical system preferably has an axially adjustable cross-scan cylindrical lens in the pre-polygon mirror optical section and an axially adjustable cross-scan cylindrical lens between a two element f-theta lens and a wobble correction cylindrical mirror in the post-polygon mirror optical section.

The axially adjustable lens in the post-polygon optics serves to flatten the cross-scan field curvature and reposition the cross-scan field focus allowing for looser fabrication tolerances for the optical scanning system. The axially adjustable lens in the pre-polygon optics serves to position the cross-scan spot size in the scan line.

Other objects and attainments together with a fuller understanding of the invention will become apparent and appreciated by referring to the following description taken in conjunction with the accompanying drawings.

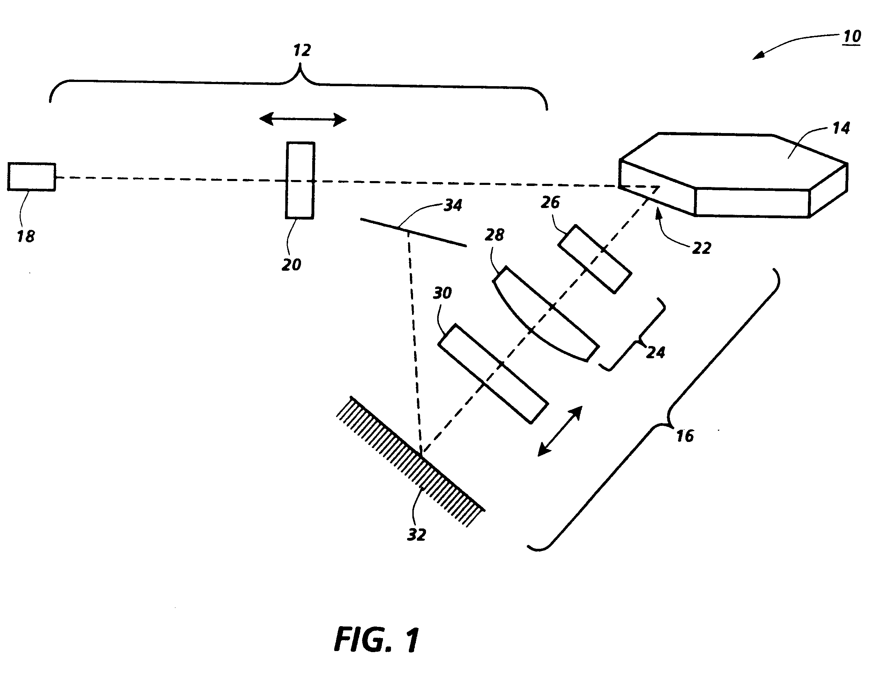

Figure 1 is a schematic illustration of an optical scanning system with axially adjustable lenses in the pre- and post- polygon mirror optical sections.

Reference is now made to Figure 1 wherein there is disclosed an optical scanning system 10 consisting of a pre-polygon mirror optical section 12, a rotating polygon mirror 14 with a plurality of facets and a post-polygon mirror optical section 16 to correct for wobble of the rotating polygon mirror.

A laser and collimator 18 emit a collimated beam which passes through a cross-scan cylindrical lens 20. The lens 20 may be cylindrical in the cross-scan plane and plano in the fast-scan plane. Thus, the lens converges the cross-scan portion of the beam focusing it on a facet 22 of the rotating polygon mirror 14 but allows the fast-scan portion of the beam to remain collimated when it strikes the facet.

The cross-scan cylindrical lens is the only optical element in the pre-polygon mirror optics. It is adjustable along the axis of the collimated beam between the laser and the facet of the rotating polygon mirror.

The beam reflected from the facet 22 is still collimated in the fast-scan plane and is now diverging in the cross-scan plane. After reflection from the facet, the beam then passes through a f-theta scan lens 24 consisting of a negative plano-spherical lens 26 and a positive plano-spherical lens 28. This f-theta scan lens configuration has sufficient barrel distortion to produce a linear scan beam which then passes through a cross-scan cylindrical lens 30.

The lens 30 may be cylindrical in the cross-scan plane and plano in the fast-scan plane. The cross-scan cylindrical lens will flatten the cross-scan field curvature of the beam from the f-theta lens while the f-theta scan lens together with the cross-scan cylinder lens produces a linear, flat-field fast scan beam. The f-theta lens should be designed with the cross-scan cylindrical lens 30 in mind because the cross-scan cylindrical lens may contribute a small, but non-negligible, amount of distortion, especially at large scan angles.

After passing through the cross-scan cylindrical lens 30, the beam is then reflected off a cylindrical wobble correction mirror 32 to a photoreceptor or scan line 34.

The f-theta scan lens, the cross-scan cylindrical lens, and the cylindrical wobble correction mirror are the optical elements of the post-polygon mirror optics. The cross-scan cylindrical lens is adjustable along the axis of the collimated beam between the facet of the rotating polygon mirror and the cylindrical wobble correction mirror.

In addition to being a field flattener, the axial adjustment of the cross-scan cylindrical lens 30 allows the cross-scan focus to be repositioned. The third order field curvature of the system depends on the sum of the individual powers of the optical elements and not on their spacing, so axial adjustment will shift the cross-scan focus without appreciably changing the field curvature. The amount of third-order distortion contributed by the cross-scan cylindrical lens is independent of its axial position, so the scan linearity is not significantly altered by this adjustment. Also, because this element has no power in the fast scan direction, this lens can be adjusted without effecting any of the other fast-scan parameters. The cross-scan focus, where the beam is best wobble corrected, can therefore be repositioned onto the photoreceptor or scan line to compensate for fabrication variations in surface radii, thickness, refractive index and spacing of the optical elements in the scanning system.

These fabrication variations in the optical elements will produce changes in both the field curvature and the optical power of the optical system. Since the field curvature depends on the sum of the individual powers of the optical elements, small, fractional changes in the optical elements do not appreciably degrade the field curvature and therefore do not adversely effect the inherent wobble correction properties of the system. A small, fractional change in the optical power, however, can produce a focus shift that is larger than the depth of wobble correction degrading the wobble in the system to unacceptable levels.

Thus, the axially adjustable cross-scan cylindrical lens in the post-polygon optics removes the need for tight fabrication tolerances by compensating for any fabrication variations in the optical elements. The looser tolerances in using the lens reduce the cost of the optical elements in the scanning system and enable the use of the more inexpensive ball bearing MPA which also reduces the cost of the scanner.

The lens 20 in the pre-polygon optics can be adjusted along its axis to position the cross-scan waist onto the photoreceptor or scan line 34 after the field flattener lens 30 in the post-polygon optics has been adjusted along its axis. The lens 20 is a cross-scan cylinder so that it does not effect the spot size in the fast-scan direction. And since it is located before the facet 22 of the polygon mirror, the lens 20 does not effect the wobble correction properties of the post-polygon optics.

The optical scanning system alignment procedure consists of aligning the pre-polygon optical section, the rotating polygon mirror and the post-polygon optical section in their nominal position in the optical scanning system. The wobble is measured at the scan line and the cross-scan cylindrical lens in the post-polygon mirror optical section is adjusted, if necessary, to refocus the beam and correct for wobble. The cross-scan spot size is then measured at the scan line and the cross-scan cylindrical lens in the pre-polygon mirror optical section is adjusted, if necessary, to reposition the beam. The wobble and the cross-scan spot size are then measured again. The alignment procedure is intended to be performed only once.

Test analysis of the optical scanning system of the present invention shows the cross-scan or sagittal field curvature is less than 0.5 mm peak to peak across the scan line. Without the axially adjustable field flattener lens, the field curvature would be approximately 3 to 6 mm peak to peak, or more, across the scan line.

Similarly, for a MPA, either ball bearing or air bearing, whose angular wobble error is less than or equal to 2.0 arc minute peak to peak, the peak to peak wobble across the scan is corrected to the sub-micron range of less than 0.5 micron with the axially adjustable field flattener lens. Without the lens, the wobble of the optical scanning system is 3 to 10 microns peak to peak.

There may be other fold mirrors in both the pre- and post- polygon mirror optics. However, these mirrors have no optical function except to fold the beam around the mechanical package of the optical scanning system and therefore are not shown.

While the invention has been described in conjunction with specific embodiments, it is evident to those skilled in the art that many alternatives, modifications and variations will be apparent in light of the foregoing description. Accordingly, the invention is intended to embrace all such alternatives, modifications and variations as fall within the scope of the appended claims.

## Claims

1. An optical scanning apparatus for correcting wobble comprising:

   a rotating polygon mirror ( 14) with a plurality of facets (22), and

   a collimated laser (18) beam directed onto one of said facets through a pre-polygon mirror optical section ( 12), characterised by

   a post-polygon mirror optical section (16) which focuses the beam reflected off said one of said facets (22) to a scan line (34), said post-polygon mirror optical section comprising a f-theta lens system (24), a cylindrical lens (30) and a wobble correction mirror (32), said cylindrical lens being adjustable along the axis of said one of said facets (22) and said wobble correction mirror (32) to flatten the cross-scan field curvature of said beam and reposition the cross-scan field focus of said beam at said scan line (34).

2. The optical scanning apparatus of claim 1 wherein said pre-polygon mirror optical section (12) comprises means (18) for generating said collimated laser beam and a cylindrical lens (20) for converging the cross-scan portion of said collimated laser beam focusing it on said one of said facets (22), said cylindrical lens (20) being adjustable along the axis of said means for generating said collimated laser beam and said one of said facets (22) to position the cross-scan waist of said beam reflected off said one of said facets in said scan line.

3. The optical scanning apparatus of claim 1 or claim 2 wherein all of the optical surfaces of said lenses are either plano, cylindrical or spherical.

**FIG. 1**

EP 0 465 136 A2